# EUROPÄISCHE PATENTANMELDUNG

(11) **EP 4 641 792 A1**
(43) Veröffentlichungstag der Anmeldung: **29.10.2025**
(21) Anmeldenummer: 24172156.2
(22) Anmeldetag: 24.04.2024
(51) Int. Cl.: H01M 50/24, H01M 10/627, H01M 10/613, A62C 3/06

(54) **DRUCKENTLASTUNGSEINRICHTUNG IN LAGERBEREICHEN**

(71) Anmelder: Düperthal Sicherheitstechnik GmbH & Co.KG, 63791 Karlstein (DE)
(72) Erfinder: Die Erfindernennung liegt noch nicht vor
(74) Vertreter: Andrejewski - Honke Patent- und Rechtsanwälte Partnerschaft mbB

(57) **Zusammenfassung**

Die Erfindung betrifft einen Sicherheitsschrank, insbesondere Brandschutzschrank zur Aufnahme von Gefahrstoffen (1), vorzugsweise Batterieschrank zur Aufnahme und Lagerung von Hochleistungsbatterien wie Lithium-Ionen-Batterien, mit einem Schrankkorpus (4) sowie zumindest einer an den Schrankkorpus (4) angeschlossenen oder hiermit wechselwirkenden Schranktür (5), wobei der Sicherheitsschrank wenigstens zwei separate Lagerbereiche (2, 3) aufweist, dadurch gekennzeichnet, dass die Lagerbereiche (2, 3) vorzugsweise thermisch voneinander getrennt sind, wobei die jeweiligen Lagerbereiche (2, 3) zumindest eine zugehörige Druckentlastungseinrichtung (8) aufweisen.

## Beschreibung

Die Erfindung betrifft einen Sicherheitsschrank, insbesondere Brandschutzschrank zur Aufnahme von Gefahrstoffen, vorzugsweise Batterieschrank zur Aufnahme und Lagerung von Hochleistungsbatterien wie Lithium-Ionen-Batterien, mit einem Schrankkorpus sowie zumindest einer an den Schrankkorpus angeschlossenen oder hiermit wechselwirkenden Schranktür, wobei der Sicherheitsschrank wenigstens zwei separate Lagerbereiche aufweist.

Sicherheitsschränke sowie allgemeine Brandschutzschränke dienen typischerweise zur Aufnahme und Lagerung von Gefahrstoffen wie z. B. flüssigen und brennbaren Chemikalien oder Feststoffen. Es können beispielsweise aber auch Gasflaschen oder anderweitige feste Gefahrstoffe im Innern des Sicherheitsschrankes bevorratet werden. Batterien, insbesondere aufladbare Batterien wie z. B. Hochleistungsbatterien wie Lithium-Ionen-Batterien, weisen ein erhebliches Gefährdungspotenzial aufgrund ihrer hohen Energiedichte auf.

Mechanische Beschädigungen in Kombination mit dieser hohen Energiedichte sowie elektrische Überlastung beim Laden und Entladen sowie eine thermische Überlastung durch extreme Wärme oder andere Energiequellen sind mögliche Gefahren bei der Behandlung von Hochleistungsbatterien. Solche Beschädigungen bzw. Überlastungen können zu einem sogenannten "thermal Runaway" führen, der mit Feuer- und Rauchentwicklung einhergehen kann. Diese Selbstentzündung kann dabei auch explosionsartig auftreten.

Um die äußere Umgebung vor etwaigen Brandherden im Innern des Sicherheitsschrankes oder umgekehrt die Gefahrstoffe vor etwaigen äußeren Brandherden zu schützen, verfügen solche Sicherheitsschränke bzw. Brandschutzschränke über eine vorgegebene Feuerwiderstandsfähigkeit, die zu unterschiedlichen Feuerwiderstandsdauern korrespondiert. Üblicherweise werden solche Brandschutzschränke entsprechend der europäischen Norm DIN EN 14470-1 klassifiziert. Ein solcher Sicherheitsschrank bzw. Brandschutzschrank zur Aufbewahrung und Lagerung von Lithium-Ionen-Batterien wird beispielsweise in der EP 3 396 094 B1 der Anmelderin beschrieben.

Zusätzlich zu den vorgenannten Erfordernissen an solche Sicherheitschränke in Bezug auf die Feuerwiderstandsfähigkeit ist zudem die Entwicklung von Rauchgasen bei Selbstentzündungen von Hochleistungsbatterien von großer Bedeutung. Im kritischen Zustand bspw. einer defekten Lithium-Ionen-Batterie können enorm große Mengen an Rauchgasen entstehen, welche abgeführt werden müssen, auch wenn sie explosionsartig auftreten. Der Explosionsdruck wird bei herkömmlichen Sicherheitsschränken für Batterien zu überwiegendem Anteil über die Türspalte bzw. Türfugen abgebaut. Diese druckentlastenden Türspalte haben den Nachteil, dass dadurch, dass die Energien der zu lagernden Batterien stetig größer werden und damit auch größere Explosionsdrücke entstehen, die Entlastung über Türspalte und kleinere Abluftöffnungen nicht ausreicht. Eine mögliche Folge davon wäre z. B. das Aufbrechen der Tür des Sicherheitsschrankes. Zudem werden bei einer solchen Druckentlastung auch Rauchgase über die Türspalte und Zuluftkanäle in die Umgebung bzw. in den Arbeitsraum abgegeben. Demzufolge besteht potentiell eine erhebliche Gesundheitsgefahr für Personen in näherer Umgebung des Sicherheitsschrankes. Des Weiteren können die Anteile von brennbaren Gasen im Arbeitsraum eine explosionsartige Atmosphäre ergeben, was zu einem zusätzlichen Schadensereignis führen könnte, wenn z. B. elektrische Verbraucher im Arbeitsraum betrieben werden.

Hier schlägt die EP 4 274 008 A1 eine Druckentlastungsöffnung als Teil des Sicherheitsschrankes vor. Die dort beschriebene Druckentlastungsöffnung und die der Druckentlastungsöffnung zugeordnete Druckentlastungseinrichtung befinden sich im Deckenelement des Schrankkorpus. Eine Druckentlastung erfolgt demzufolge für den gesamten Innenbereich des beschriebenen Sicherheitsschrankes und unterscheidet nicht zwischen verschiedenen Bereichen innerhalb des Schrankkorpus.

Die vorgenannte DIN EN 14470-1 bezieht sich auf die Feuerwiderstandsfähigkeit des gesamten Sicherheitsschrankes und lässt dabei außeracht, dass es innerhalb des Sicherheitsschrankes zwischen den dort gelagerten Batterien gegebenenfalls zu einer sogenannten Kettenreaktion kommen kann, wobei eine sich selbst entzündende Batterie eine naheliegende Batterie in der Folge entzündet usw..

Der Stand der Technik lässt demzufolge zu, dass eine etwaige Kettenreaktion zwischen den gelagerten Batterien möglich ist, da keine Möglichkeit bekannt ist, wie das Entzünden weiterer Batterien im Schrankinnern verhindert werden kann.

Der Sicherheitsschrank als solches kann zwar insgesamt feuerwiderstandsfähig sein und zudem eine generelle Druckentlastungöffnung aufweisen, jedoch wird dadurch nicht verhindert, dass sich die im Innern gelagerten Batterien gegenseitig weiter entzünden und somit selbst ein nach DIN EN 14470-1 angelegter Sicherheitsschrank möglicherweise nicht ausreicht, da solche Kettenreaktionen jeweils zeitversetzte Entzündungen und demnach eine insgesamt längere Brenndauer bedingen.

Der Erfindung liegt das technische Problem zugrunde, einen derartigen Sicherheitsschrank so weiterzuentwickeln, dass insbesondere im Schrankinnenraum entstehende Brandherde und Explosionsdrücke einfach und zuverlässig beherrscht werden können.

Zur Lösung dieser technischen Problemstellung ist ein gattungsgemäßer Sicherheitsschrank im Rahmen der Erfindung dadurch gekennzeichnet, dass die im Innern des Sicherheitsschrank befindlichen Lagerbereiche vorzugsweise thermisch voneinander getrennt sind, wobei die jeweiligen Lagerbereiche zumindest eine zugehörige Druckentlastungseinrichtung aufweisen.

Im Rahmen der Erfindung kommt also zunächst einmal wenigstens eine im Schrankkorpus angeordnete (meistens horizontal und/oder vertikal verlaufende) Trennebene zur Trennung der Lagerbereiche voneinander zum Einsatz. Diese Trennebenen können z. B. zeitgleich als Lagerebene für die zu lagernden Gefahrstoffe dienen. Um die bevorzugte thermische Trennung der Lagerbereiche voneinander zu erreichen, können diese Trennebenen bzw. Lagerebenen Materialien mit einem niedrigen Wärmeleitkoeffizienten enthalten oder aus ihnen ausgebildet sein. Beispielhaft können hier nicht brennbare oder schwer entflammbare Isoliermaterialien aus Steinwolle oder Glasfaser genannt werden. Auch Beschichtungen der Lagerebenen oder Lagerbereiche mit geringer Wärmeleitfähigkeit auf Basis herkömmlicher Baumaterialien wie z. B. Stahl oder thermisch belastbaren Kunststoffen sind möglich. Die Trennebenen können erfindungsgemäß variabel zueinander beabstandet sein und zudem auch variabel zueinander orientiert sein, umso gegebenenfalls verschiedene Größen der Lagerbereiche zu ermöglichen. Bevorzugt sind Lagerbereiche in einheitlicher Größe und in rechteckiger Querschnittsform.

Jedenfalls handelt es sich bei den Lagerbereichen um in sich abgeschlossene Gehäuse bzw. Einzelgehäuse im Innern des Sicherheitsschrankes, die üblicherweise eine front- oder oberseitige Öffnung aufweisen und lediglich durch die meistens frontseitige Schranktür zugänglich sind. Die Wände dieser Einzelgehäuse werden durch die Trennebenen definiert.

Die erfindungsgemäßen Lagerbereiche weisen jeweils eine Druckentlastungseinrichtung auf, wobei die jeweilige Druckentlastungseinrichtung vorzugsweise eine Druckentlastungsklappe aufweist. Die Druckentlastungsklappe ist so konzipiert, dass diese sich bei hohem Explosionsdruck öffnet und den Überdruck abgibt. Nach erfolgtem Druckabbau schließt die Klappe wieder. Eine solche Druckentlastungseinrichtung mit einer Druckentlastungsklappe kann beispielsweise auch als Überdruckventil ausgebildet sein, um so lediglich Gasflüsse in eine Richtung zuzulassen.

Die Druckentlastungsklappe ist vorzugsweise federbeaufschlagt ausgebildet, sodass sich die Klappe bei hohem Explosionsdruck gegen die Federkraft öffnet und anschließend wieder schließt. Die Federbeaufschlagung der Druckentlastungsklappe ermöglicht es somit zudem, mithilfe der der Feder innewohnenden Federkonstante die Druckgrenze, ab welcher die Druckentlastungsklappe öffnet, variabel einzustellen. Andere Beaufschlagungen wie z. B. durch einen elektromotorischen Antrieb oder anderweitige mechanische Lösungen mit Federwirkkraft sind ebenso umfasst.

Um entstehende Abgase kontrolliert abführen zu können, ist vorzugsweise an die jeweilige Druckentlastungseinrichtung eines Lagerbereiches zumindest ein Abgaskanal angeschlossen. Da die Abgase im Falle einer explosionsartigen Selbstentzündung z. B. einer Lithium-Ionen-Batterie mit einem hohen Druck abgeführt werden müssen, sind die jeweiligen Abgaskanäle vorzugsweise aus druckresistenten Materialien gefertigt, wie z. B. Metallen oder Hochfestigkeitskunststoffen. Der Abgaskanal kann bevorzugt die Druckentlastungseinrichtung bzw. die Druckentlastungsklappe umschließen und ggf. mit dieser fest verbunden sein, um so einen etwaigen Gasaustritt zu verhindern. Eine solche feste Verbindung kann beispielhaft eine Schweißverbindung sein.

Die einzelnen an die Lagerbereiche angeschlossenen Abgaskanäle werden erfindungsgemäß zu einem Sammelkanal zusammengeführt. Das Zusammenführen der einzelnen Abgaskanäle und die Vereinigung dieser zu einem einzigen Sammelkanal vereinfacht insgesamt die Handhabe der Druckentlastung sowie zudem die allgemeine Entlüftung des Sicherheitsschranks. Eine zentrale Entlüftung ist somit besonders einfach zu realisieren. Der Sammelkanal kann beispielsweise in ein zentrales Abluftrohr münden, welches an mehrere der erfindungsgemäßen Sicherheitsschränke angeschlossen ist. Erfindungsgemäß können in den einzelnen Abgaskanälen und/oder dem Sammelkanal ebenso erfindungsgemäße Sensoren angebracht sein.

Bevorzugt weist der Sicherheitsschrank zusätzlich zu den an den jeweiligen Lagerbereichen angeschlossenen Abgaskanälen einen Abluftanschluss an der Oberseite des Schrankkorpus auf, welcher an den Sammelkanal angeschlossen ist. Die oberseitige Verortung dieses Abluftanschlusses ermöglicht es besonders vorteilhaft, Gase mit einer geringeren Dichte als Luft wie z. B. Wasserstoff effektiv abzusaugen. Der Anschluss an den Sammelkanal ermöglicht es zudem erfindungsgemäß besonders effektiv, eine Absaugung im gesamten Sicherheitsschrank sicherzustellen, dadurch, dass die Absaugung zentral geregelt ist.

Die zentrale Entlüftung bzw. Absaugung des Sicherheitsschranks ist erfindungsgemäß mithilfe eines Ventilators realisiert. Der Ventilator ist vorzugsweise an den Sammelkanal angeschlossen oder in diesem verortet und kann demzufolge sämtliche Abgaskanäle zeitgleich entlüften bzw. absaugen. Erfindungsgemäß sind auch mehrere Ventilatoren denkbar. Andere Absaugverfahren sind erfindungsgemäß ebenfalls umfasst.

Erfindungsgemäß weist der Sicherheitsschrank druckentlastende Türspalte auf. Diese Türspalte sind in der Regel als Fugen ausgeprägt und dienen hauptsächlich als Notfalldruckentlastung für den Fall, dass eine Fehlfunktion z. B. einer Druckentlastungseinrichtung vorliegt. Erfindungsgemäß können diese druckentlastenden Türspalte jedoch auch zusätzlich zu den zuvor beschriebenen Druckentlastungseinrichtungen verwendet werden. Vorzugsweise sind diese Türspalte jedoch so ausgelegt, dass die Druckentlastung nur dann stattfindet, wenn zumindest eine Druckentlastungseinrichtung bzw. zumindest eine Druckentlastungsklappe nicht ordnungsgemäß arbeitet. Beispielhaft können solche druckentlastenden Türspalte mit schaumstoffartigem oder elastomeren Material ausgefüllt sein.

Im Rahmen der Erfindung kommen in den jeweiligen Lagerbereichen angeordnete Sensoren zum Einsatz. Die von den fraglichen Sensoren erzeugten Sensorsignale werden von einer Steuereinheit ausgewertet.

Der Rückgriff auf z. B. elektronische Sensoren und die hiervon erzeugten korrespondierenden Sensorsignale ermöglichen eine präzise und spezifische Auswertung des jeweiligen Sensorsignals seitens der Steuereinheit. So kann das betreffende Sensorsignal des Sensors dahingehend ausgewertet werden, ob zumindest ein Schwellwert überschritten wird. Handelt es sich bei dem fraglichen Sensor beispielhaft und vorteilhaft um einen Temperatur- oder Rauchgassensor, so korrespondiert der fragliche Schwellwert zu einem Temperatur- oder Rauchgasgrenzwert im Schrankinnern. Sobald dieser Grenzwert im Innern des Schrankkorpus überschritten worden ist, leitet die Steuereinheit als Folge hiervon das Schließsignal ab und sorgt dieses Schließsignal seinerseits dafür, dass die Tür des Schrankkorpus geschlossen wird, oder - falls Sie bereits geschlossen ist - geschlossen bleibt. Zusätzlich mag die Tür verriegelt werden. Dies wird beispielsweise in der EP 3 356 630 B1 der Anmelderin beschrieben.

Somit wird besonders vorteilhaft sichergestellt, dass der erfindungsgemäße Sicherheitsschrank und vorzugsweise Batterieschrank auf jeden Fall geschlossen wird bzw. geschlossen bleibt, für den Fall, dass sich beispielsweise ein Brandherd mit Gasentwicklung im Innern entwickelt, was im vorliegenden Fall dazu korrespondiert, dass der als Temperatur- oder Rauchgassensor ausgebildete Sensor die zuvor definierten Gasgrenzwerte überschreitet.

Erfindungsgemäß ist dieses Verfahren auch in Bezug auf einen Gasmengensensor und einen zugehörigen Gasmengen-Schwellwert anwendbar.

Grundsätzlich kann an dieser Stelle auch mit mehreren Schwellwerten gearbeitet werden. Sobald das fragliche Sensorsignal beispielsweise einen ersten Grenzwert und dann einen zweiten Grenzwert bzw. einen ersten Temperatur-Grenzwert und dann einen zweiten Rauchgas-Grenzwert überschreitet, wird dies als Schließsignal seitens der Steuereinheit interpretiert. Dieses Schließsignal kann beispielhaft einen Türschließmechanismus beaufschlagen, welcher dafür sorgt, dass die Schranktür geschlossen wird.

Selbstverständlich bleibt die betreffende Tür oder Schranktür in dem Fall geschlossen, dass sie bei Vorliegen des Schließsignals diesen Zustand bereits eingenommen hat. Dann sorgt der Türschließmechanismus praktisch für eine zusätzliche Verriegelung der Tür respektive der Schranktür.

Um eine noch genauere und zielgerichtetere Auswertung des Sensorsignals zu ermöglichen, kann alternativ oder zusätzlich zur Überschreitung des zumindest einen Schwellwerts die Überschreitung eines Grenzwertes zeitlicher Gradienten von der Steuereinheit als Schließsignal interpretiert werden. In diesem Fall werden zeitliche Änderungen des jeweiligen Sensorsignals, also zeitliche Gradienten, ausgewertet. Sobald die hieraus resultierenden jeweiligen zeitlichen Gradienten bzw. Steigungen des Sensorsignales über der Zeit einen bestimmten und zuvor eingestellten Grenzwert überschreiten, wird hieraus seitens der Steuereinheit das Schließsignal abgeleitet. Es ist beispielsweise denkbar, dass das Sensorsignal innerhalb von einer Sekunde um z. B. 50 % oder noch mehr ansteigt. Das deutet im Beispielsfall auf einen sich rapide entwickelnden Kurzschluss einer Lithium-Ionen-Batterie im Innern des Sicherheitsschrankes und eine damit einhergehende rapide Gasentwicklung hin.

Wahlweise kann dieses Schließprinzip bzw. Abschottungsprinzip auch auf die erfindungsgemäßen einzelnen Lagerbereiche übertragen werden. Hier wäre es z. B. denkbar, dass jeder Lagerbereich eine unabhängige Schließvorrichtung aufweist, welche unabhängig von den weiteren Lagerbereichen im Falle einer Grenzwertüberschreitung und anschließenden Sensorsignalübermittlung an die Steuereinheit isoliert werden kann. In diesem Fall ist den zuvor beschriebenen Einzelgehäusen bzw. Lagerbereichen nicht nur die zentrale Schranktür zugeordnet, sondern kann jedes Einzelgehäuse mit einer separaten zusätzlichen Einzeltür als Schließvorrichtung bzw. Bestandteil einer solchen im Bedarfsfall verschlossen werden.

Dadurch kann der erfindungsgemäße Sicherheitsschrank auf lediglich lokal auftretende Brandherde mit Gasaustritten unverzüglich und gezielt reagieren, wobei der etwaige Brandherd darüber hinaus auf diese Weise lokalisiert werden kann. Denn der Lagerbereich, dessen Sensor zu einem Schließsignal seitens der Steuereinheit geführt hat, lässt sich lokal im Innern des Schrankkorpus auffinden und beispielsweise grafisch auf einem an die Steuereinheit angeschlossenen Bildschirm wiedergeben. Die Steuereinheit veranlasst erfindungsgemäß somit die Türschließung und wahlweise auch die Isolierung des einzelnen Lagerbereichs, sobald zumindest ein Sensorsignal eines einzigen der Sensoren seitens der Steuereinheit als Schließsignal interpretiert wird.

Um die einzelnen Lagerbereiche im Innern des Schrankkorpus einwandfrei mithilfe der zugehörigen Sensoren zu erfassen, sind die fraglichen Sensoren vorteilhaft jeweils innenseitig an den Schrankkorpus angeschlossen. Wie bereits zuvor erläutert, handelt es sich bei dem Sensor vorteilhaft um einen Temperatursensor. Grundsätzlich kann der Sensor alternativ oder zusätzlich auch als Rauch-, und/oder Sensor zur Spannungsprüfung oder von Kurzschlüssen ausgelegt sein. In diesem Fall werden folglich übermäßige Rauch-, Dampf- oder Temperaturentwicklungen oder auch Kurzschlüsse sowie erhöhte elektrische Spannungen im Inneren des Schrankkorpus erfasst und führen - wie beim Gassensor - zu einem Schließsignal. Andere Sensoren zur Ermittlung von relevanten Daten betreffend erfindungsgemäße Gefahrstoffe sind ebenfalls umfasst.

Alternativ oder zusätzlich kann es sich bei dem Sensor auch um einen Leckagesensor handeln. Etwaige Leckagen sind beispielsweise austretende Flüssigkeiten von im Innern des Schrankkorpus bevorrateten Gefahrstoffen wie z. B. Lithium-Ionen-Batterien mit Elektrolytflüssigkeiten. Sobald dieser Leckagesensor einen bestimmten Schwellwert, beispielsweise Null, überschreitet, wird dies erneut seitens der Steuereinheit als Schließsignal interpretiert und führt dazu, dass die Steuereinheit den Türschließmechanismus beaufschlagt.

Vorzugsweise kann der Sicherheitsschrank eine Feuerwiderstandsklasse erfüllen. Beispielhaft eine Feuerwiderstandsklasse nach DIN EN 14470-1. Dadurch wird ein Funktionserhalt über 90 Minuten gewährleistet. Optional können auch die einzelnen Lagerbereiche so abgetrennt und ausgeprägt sein, dass sie jeweils die Feuerwiderstandsklasse gemäß DIN EN 14470-1 erfüllen. Zukünftige Vorschriften bzw. normale Weiterentwicklungen für Feuerwiderstandsklassen bei Lithium-Ionen-Batterien sind ebenfalls denkbar.

Erfindungsgemäß stellt der Sicherheitsschrank in den jeweiligen Lagerbereichen auch eine optionale elektrische Lademöglichkeit für die dort gelagerten Batterien bereit. Dabei ist es auch möglich, dass allgemeine Lademöglichkeiten zusätzlich zu den in den jeweiligen Lagerbereichen verorteten Lademöglichkeiten vorhanden sind. Diese können z. B. außerhalb der Lagerbereiche wie beispielsweise an den Innenflächen der Türen oder ähnlichem verortet sein.

Die Lademöglichkeit kann erfindungsgemäß in verschiedenen Ausprägungen vorhanden sein, so sind z. B. einfache Ladekabel denkbar, die bei dem Vorgang des Bestückens manuell von der Bedienperson angeschlossen werden. Eine weitere denkbare Form der Lademöglichkeit ist z. B. zumindest eine Docking-Ladestation in dem jeweiligen Lagerbereich, die für die zu lagernde Batterie passgenau angefertigt ist. Das ist zudem dann von Vorteil, wenn z. B. mit genormten oder standardisierten Batterien in dem jeweiligen Sicherheitsschrank gearbeitet wird. Solche Ladestationen können entweder Stecksysteme oder lediglich außenseitige Kontaktpunkte zum Laden der Batterien aufweisen. Ladestationen mit einem Stecksystem können zudem mit einem Sicherheitsmechanismus ausgestattet sein. Dieser Sicherheitsmechanismus kann bevorzugt für den Ladevorgang von Hochspannungsbatterien verwendet werden, da dort die Entzündungsgefahr in der Regel am höchsten ist. Ein solcher Sicherheitsmechanismus kann beispielsweise ein Pin mit Rastfunktion und bevorzugt ein federbeaufschlagter Pin mit Rastfunktion sein, der bei erfolgreichem Einführen der Batterie in das Ladestecksystem einrastet, sobald der Stecker und die zugehörige Aufnahme für den Stecker ausreichend miteinander kontaktiert sind.

Bevorzugt ist der Sicherheitsschrank zudem mit einer Anzeige ausgestattet, worauf verschiedene Parameter der im Sicherheitsschrank lagernden Batterien angezeigt werden können. Im Beispielsfall der Lagerung von Lithium-Ionen-Batterien sind insbesondere der Ladestatus und/oder die Temperatur auf der dafür vorgesehenen Anzeige angegeben.

Ein weiterer Aspekt der Erfindung betrifft die Verwendung eines Sicherheitsschrankes gemäß vorstehender Beschreibung zur Lagerung von Batterien. Die obigen Ausführungen dienen daher zusätzlich zur Erläuterung des vorgeschlagenen Sicherheitsschrankes sowie zur Beschreibung der vorgeschlagenen Verwendung.

Im Folgenden wird die Erfindung anhand einer lediglich ein Ausführungsbeispiel darstellenden Zeichnung näher erläutert; es zeigen:
- Fig. 1: einen erfindungsgemäßen Sicherheitsschrank in einer perspektivischen Darstellung,
- Fig. 2: den Sicherheitsschrank schematisch in einer Frontansicht mit segmentiertem Innenraum,
- Fig. 3: den Sicherheitsschrank schematisch in einer Seitenansicht

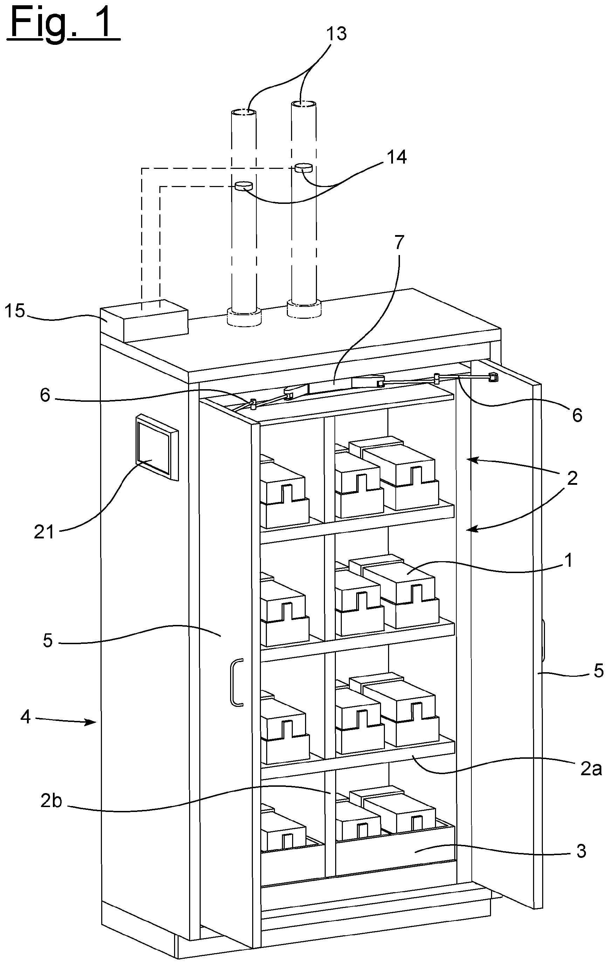

In den Figuren ist ein Sicherheitsschrank dargestellt, der vorliegend und nicht einschränkend als Batterieschrank ausgelegt ist und zur Bevorratung von in der Fig. 1 gezeigten Batterien 1 dient. Die Batterien 1 werden dabei einerseits von einer Trennebene bzw. Ablage 2a getragen und andererseits in einer Schublade 3 aufgenommen. Die Ablage 2a und die Schublade 3 lassen sich jeweils aus einem Schrankkorpus 4 bei geöffneten Türen 5 ausziehen, um einzelne darauf befindliche Batterien 1 zu ergreifen bzw. hierauf zur Lagerung abzustellen. Zusätzlich zu den horizontalen Trennebenen bzw. Ablagen 2a sind außerdem vertikale Trennebenen 2b vorhanden, um voneinander getrennte Lagerbereiche 2,3 zu definieren. Die Lagerbereiche 2,3 können demnach als von Trennebenen 2a, 2b definierte Parzellen oder beispielhaft auch Schubladen 3 sein. Folgerichtig definieren die Lagerbereiche 2,3 jeweils Einzelgehäuse im Innern des Sicherheitsschrankes, die üblicherweise zumindest einseitig geöffnet sind. Das gilt selbstverständlich nur beispielhaft.

Die beispielhaft genannten Lagerbereiche 2,3 sind insgesamt sowohl thermisch also auch drucksensibel voneinander getrennt ausgebildet. Zwischen den einzelnen Lagerbereichen 2, 3 ist es demnach nicht vorgesehen, dass ein Gas- bzw. Temperaturaustausch in Notfallsituationen stattfindet. Zu diesem Zweck sind die Trennebenen 2a, 2b hier beispielhaft und nicht einschränkend größtenteils aus nicht brennbaren Isoliermaterialien ausgebildet, wie sie zuvor bereits erläutert wurden. Beispielsweise mag es sich um Glasfasermatten oder mit solchen Glasfasermatten beschichtete Gipsfaserplatten, Gipskartonplatten, Holzwerkstoffplatten etc. handeln.

Bei den beiden Türen bzw. Schranktüren 5 handelt es sich um Drehflügeltüren bzw. Schranktüren 5, die drehbar an den Schrankkorpus 4 angeschlossen sind. Des Weiteren weisen die beiden Drehflügeltüren 5 im Ausführungsbeispiel und nicht einschränkend einen Schließmechanismus 6 auf, welcher federbeaufschlagt oder motorisch mit einem Elektromotor 7 beaufschlagt ausgeprägt ist.

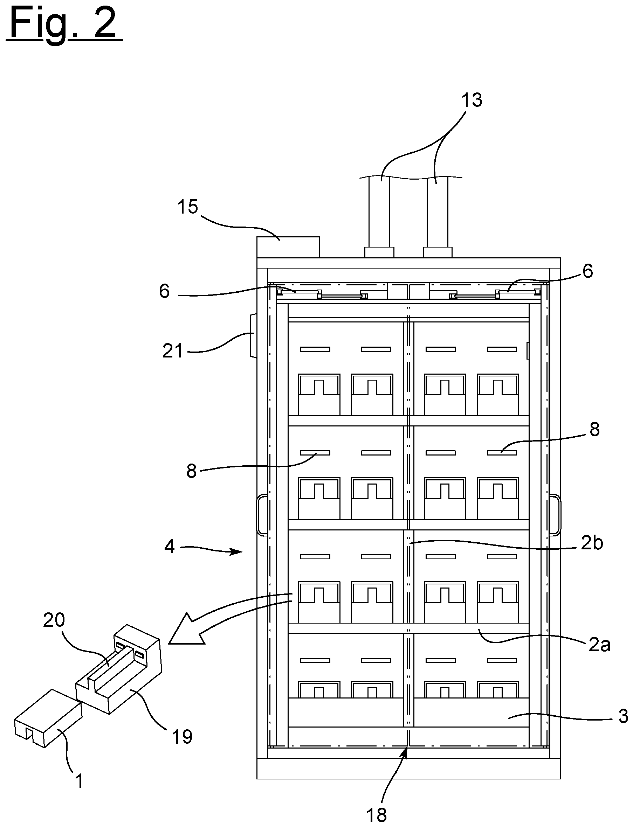

Die jeweiligen Lagerbereiche 2,3 im Innern des Schrankkorpus 4 weisen hier beispielhaft und nicht einschränkend wie aus Fig. 2 ersichtlich jeweils zwei Druckentlastungseinrichtungen 8 auf. Die Druckentlastungseinrichtungen 8 befinden sich innenseitig an der Rückseite des Schrankkorpus 4. In einem hier nicht gezeigten Ausführungsbeispiel sind solche Druckentlastungseinrichtungen 8 auch, bspw. die rückseitigen Öffnungen ersetzend, an den Schrankseiten verortet.

Die Druckentlastungseinrichtung 8 setzt sich beispielhaft aus einer drehbar gelagerten, mit einer Feder 9 beaufschlagten, Druckentlastungsklappe 10 und einem Drucksensor 11 zusammen. Die Feder 9 weist eine dem gewünschten Schwellwert des Drucks angepasste Federkonstante K auf, um ein Öffnen der Druckentlastungsklappe 10 bei ausreichend Gasdruck P bei beispielsweise einem Thermal Runaway einer Batterie zuzulassen.

Im Falle einer rapiden Abgasentwicklung und demnach Erhöhung des Gasdrucks im Innern des einzelnen Lagerbereichs 2,3 öffnet sich also die Druckentlastungsklappe 10 und gibt den Druck in den dort angeschlossenen Abgaskanal 12 des Lagerbereiches 2,3 frei. In dem Ausführungsbeispiel sind in dem jeweiligen Lagerbereich 2,3 zwei Druckentlastungseinrichtungen 8 mit jeweils angeschlossenem Abgaskanal 12 vorgesehen. Diese zwei Abgaskanäle 12 werden bereits in geringer Proximität zu dem Schrankkorpus 4 an der dortigen Rückseite zu einem gemeinsamen Abgaskanal 12 des Lagerbereichs 2,3 vereinigt.

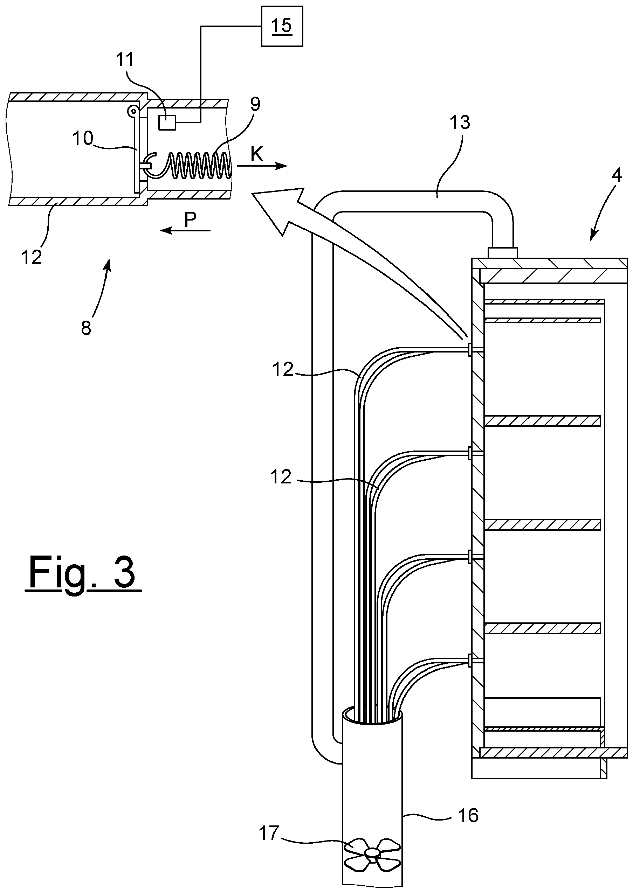

Die Abgaskanäle 12 der jeweiligen Lagerbereiche 2,3 werden in dem hier dargestellten Ausführungsbeispiel und nicht einschränkend rückseitig des Schrankkorpus 4 zu einem Sammelkanal 16, wie in der Fig. 3 ersichtlich, vereinigt.

Zusätzlich zu den den Lagerbereichen 2,3 zugeordneten Abgaskanälen 12 sind außerdem zwei allgemeine Abluftkanäle 13 an der Oberseite des Schrankkorpus 4 vorhanden. Da die Abluftkanäle 13 hauptsächlich der Entlüftung des Sicherheitsschranks dienen, sind hier keine Druckentlastungsklappen vonnöten. Dennoch sind in den Abluftkanälen 13 beispielhaft mehrere Sensoren 14 verortet, wie z.B. und nicht einschränkend Gassensoren, Temperatursensoren oder Feuchtigkeitssenoren oder Kombinationen davon, um den allgemeinen Status des Sicherheitsschrankes mithilfe einer zugeordneten Steuereinheit 15 messen und kontrollieren zu können.

Die Abluftkanäle 13 werden ebenso mit dem Sammelkanal 16 vereinigt, um eine zentrale Ent- bzw. Belüftung bereitstellen zu können. Dazu ist der Sammelkanal 16 mit einem Ventilator 17 versehen. Somit kann besonders effizient mit einem einzigen zentralen Absaugsystem der gesamte Sicherheitsschrank abgesaugt bzw. entlüftet werden. Eine Belüftung des Sicherheitsschranks bei geänderter Drehrichtung des Ventilators 17 ist ebenso möglich.

Die Sensoren 14 der Abluftkanäle 13 sowie die Sensoren 11 der Abgaskanäle 12 kommunizieren mit der hier beispielhaft außenseitig verorteten Steuereinheit 15. Im Falle eines Überdrucks und/oder Temperaturüberschreitung durch z.B. einen Thermal Runaway einer gelagerten Batterie erhält die Steuereinheit 15 ein entsprechendes Signal und leitet ein Schließsignal an den Schließmechanismus 6 weiter, um die Schranktür zu schließen, bzw. geschlossen zu halten.

Für den Fall, dass bspw. eine Druckentlastungseinrichtung 8 eine Fehlfunktion aufweist und die Abluftkanäle 13 einen etwaigen Überdruck nur teilweise ausgleichen können, weist der Sicherheitsschrank beispielhaft Elastomerfugen 18 in den Türbereichen auf, um so besonders vorteilhaft den Überdruck ausgleichen zu können und ein Aufsprengen der Türen zu vermeiden.

In dem gezeigten Ausführungsbeispiel sind in den jeweiligen Lagerbereichen Docking-Ladestationen 19 für Hochleistungsbatterien vorgesehen. Die Batterie kann wahlweise nach Herausziehen der Ablage 2a oder Schublade 3 auf die Docking-Ladestation 19 gesetzt bzw. geschoben werden. Beispielsweise geschieht dies mit einer Art 'Slide-In' Vorrichtung. Dafür ist die Ladestation 19 mit einer Schiene 20 ausgestattet, worauf die Batterie 1 mithilfe einer passgenauen Kontur an der Unterseite aufgesetzt und insgesamt kontaktiert werden kann. Über diese Kontakte kann beispielhaft und nicht einschränkend zudem ein Datenaustausch zwischen Batterie und Steuereinheit 15 stattfinden. Es können z.B. Ladezyklen sowie aktuelle und vergangene Temperaturdaten erfasst werden.

Der Schrankkorpus weist ferner außenseitig eine Anzeigeeinheit 21 auf, auf welcher die Bedienperson beispielsweise Ladezustände, Temperaturen, Gasdruck sowie weitere Einstell- bzw. Überwachungsmöglichkeiten zur Verfügung gestellt bekommt.

### Bezugszeichenliste

1 Gefahrstoff
2a, 2b Trennebene
3 Schublade
4 Schrankkorpus
5 Schranktür
6 Schließmechanismus
7 Elektromotor
8 Druckentlastungseinrichtung
9 Feder
10 Druckentlastungsklappe
11 Sensor
12 Abgaskanal
13 Abluftkanal
14 Sensoren
15 Steuereinheit
16 Sammelkanal
17 Ventilator
18 Druckentlastungsfuge
19 Ladestation
20 Schiene
21 Anzeigeeinheit
K Federkonstante
P Abgasdruck

## Patentansprüche

1. Sicherheitsschrank, insbesondere Brandschutzschrank zur Aufnahme von Gefahrstoffen (1), vorzugsweise Batterieschrank zur Aufnahme und Lagerung von Hochleistungsbatterien wie Lithium-Ionen-Batterien, mit einem Schrankkorpus (4) sowie zumindest einer an den Schrankkorpus (4) angeschlossenen oder hiermit wechselwirkenden Schranktür (5), wobei der Sicherheitsschrank wenigstens zwei separate Lagerbereiche (2, 3) aufweist,
**dadurch gekennzeichnet, dass**
die Lagerbereiche (2, 3) vorzugsweise thermisch voneinander getrennt sind, wobei die jeweiligen Lagerbereiche (2, 3) zumindest eine zugehörige Druckentlastungseinrichtung (8) aufweisen.

2. Sicherheitsschrank nach Anspruch 1, **dadurch gekennzeichnet, dass** die Druckentlastungseinrichtung (8) eine Druckentlastungsklappe (10) aufweist.

3. Sicherheitsschrank nach Anspruch 2, **dadurch gekennzeichnet, dass** die Druckentlastungsklappe (10) mithilfe einer Feder (9) federbeauschlagt ausgebildet ist.

4. Sicherheitsschrank nach Anspruch 1 bis 3, **dadurch gekennzeichnet, dass** an die jeweilige Druckentlastungseinrichtung (8) eines Lagerbereiches (2, 3) zumindest ein Abgaskanal (12) angeschlossen ist.

5. Sicherheitsschrank nach Anspruch 1 bis 4, **dadurch gekennzeichnet, dass** die einzelnen an die Lagerbereiche (2, 3) angeschlossenen Abgaskanäle (12) zu einem Sammelkanal (16) zusammengeführt werden.

6. Sicherheitsschrank nach Anspruch 1 bis 5, **dadurch gekennzeichnet, dass** der Sicherheitsschrank einen Abluftanschluss (13) an der Oberseite des Schrankkorpus (4) aufweist, welcher an den Sammelkanal (16) angeschlossen ist.

7. Sicherheitsschrank nach Anspruch 1 bis 6, **dadurch gekennzeichnet, dass** der Sammelkanal (16) mithilfe eines Ventilators (17) entlüftet wird.

8. Sicherheitsschrank nach Anspruch 1 bis 7, **dadurch gekennzeichnet, dass** die Schranktür (5) druckentlastende Türspalte (18) aufweist.

9. Sicherheitsschrank nach Anspruch 1 bis 8, **dadurch gekennzeichnet, dass** in den jeweiligen Lagerbereichen (2, 3) Sensoren (11) angeordnet sind, deren Sensorsignale von einer Steuereinheit (15) ausgewertet werden.

10. Sicherheitsschrank nach Anspruch 1 bis 9, **dadurch gekennzeichnet, dass** aus den Sensorsignalen bei Überschreitung zumindest eines Schwellwertes und/oder eines Grenzwertes zeitlicher Gradienten von der Steuereinheit (15) ein Schließsignal abgeleitet und zur Türschließung umgesetzt wird.

11. Sicherheitsschrank nach Anspruch 1 bis 10, **dadurch gekennzeichnet, dass** der Sensor (11) als Temperatursensor, Rauch-, Gas-, Dampfsensor oder Leckagesensor einzeln oder in Kombination ausgebildet ist.

12. Sicherheitsschrank nach Anspruch 1 bis 11, **dadurch gekennzeichnet, dass** der Sicherheitsschrank zumindest die Erfordernisse gemäß DIN EN 14470 erfüllt.

13. Sicherheitsschrank nach Anspruch 1 bis 12, **dadurch gekennzeichnet, dass** der Sicherheitsschrank in den jeweiligen Lagerbereichen (2, 3) zumindest eine Lademöglichkeit (19) für die gelagerten Batterien (1) bereitstellt.

14. Verwendung eines Sicherheitsschranks, vorzugsweise Batterieschranks, zur Aufnahme und Lagerung von Hochleistungsbatterien (1) wie Lithium-Ionen-Batterien, wobei der Sicherheitsschrank mit einem Schrankkorpus (4) sowie zumindest einer an den Schrankkorpus angeschlossenen oder hiermit wechselwirkenden Schranktür (5) ausgestattet ist , und wobei der Sicherheitsschrank wenigstens zwei separate Lagerbereiche (2, 3) aufweist,
**dadurch gekennzeichnet, dass**
die Lagerbereiche (2, 3) vorzugsweise thermisch voneinander getrennt sind, wobei die jeweiligen Lagerbereiche (2, 3) zumindest eine zugehörige Druckentlastungseinrichtung (8) aufweisen.

## Geänderte Patentansprüche

### Geänderte Patentansprüche gemäss Regel 137(2) EPÜ.

1. Sicherheitsschrank, insbesondere Brandschutzschrank zur Aufnahme von Gefahrstoffen (1), vorzugsweise Batterieschrank zur Aufnahme und Lagerung von Hochleistungsbatterien wie Lithium-Ionen-Batterien, mit einem Schrankkorpus (4) sowie zumindest einer an den Schrankkorpus (4) angeschlossenen oder hiermit wechselwirkenden Schranktür (5), wobei der Sicherheitsschrank wenigstens zwei separate Lagerbereiche (2, 3) aufweist,
**dadurch gekennzeichnet, dass**
die Lagerbereiche (2, 3) thermisch voneinander getrennt sind, wobei die jeweiligen Lagerbereiche (2, 3) zumindest eine zugehörige Druckentlastungseinrichtung (8) aufweisen.

2. Sicherheitsschrank nach Anspruch 1, **dadurch gekennzeichnet, dass** die Druckentlastungseinrichtung (8) eine Druckentlastungsklappe (10) aufweist.

3. Sicherheitsschrank nach Anspruch 2, **dadurch gekennzeichnet, dass** die Druckentlastungsklappe (10) mithilfe einer Feder (9) federbeauschlagt ausgebildet ist.

4. Sicherheitsschrank nach Anspruch 1 bis 3, **dadurch gekennzeichnet, dass** an die jeweilige Druckentlastungseinrichtung (8) eines Lagerbereiches (2, 3) zumindest ein Abgaskanal (12) angeschlossen ist.

5. Sicherheitsschrank nach Anspruch 1 bis 4, **dadurch gekennzeichnet, dass** die einzelnen an die Lagerbereiche (2, 3) angeschlossenen Abgaskanäle (12) zu einem Sammelkanal (16) zusammengeführt werden.

6. Sicherheitsschrank nach Anspruch 1 bis 5, **dadurch gekennzeichnet, dass** der Sicherheitsschrank einen Abluftanschluss (13) an der Oberseite des Schrankkorpus (4) aufweist, welcher an den Sammelkanal (16) angeschlossen ist.

7. Sicherheitsschrank nach Anspruch 1 bis 6, **dadurch gekennzeichnet, dass** der Sammelkanal (16) mithilfe eines Ventilators (17) entlüftet wird.

8. Sicherheitsschrank nach Anspruch 1 bis 7, **dadurch gekennzeichnet, dass** die Schranktür (5) druckentlastende Türspalte (18) aufweist.

9. Sicherheitsschrank nach Anspruch 1 bis 8, **dadurch gekennzeichnet, dass** in den jeweiligen Lagerbereichen (2, 3) Sensoren (11) angeordnet sind, deren Sensorsignale von einer Steuereinheit (15) ausgewertet werden.

10. Sicherheitsschrank nach Anspruch 1 bis 9, **dadurch gekennzeichnet, dass** aus den Sensorsignalen bei Überschreitung zumindest eines Schwellwertes und/oder eines Grenzwertes zeitlicher Gradienten von der Steuereinheit (15) ein Schließsignal abgeleitet und zur Türschließung umgesetzt wird.

11. Sicherheitsschrank nach Anspruch 1 bis 10, **dadurch gekennzeichnet, dass** der Sensor (11) als Temperatursensor, Rauch-, Gas-, Dampfsensor oder Leckagesensor einzeln oder in Kombination ausgebildet ist.

12. Sicherheitsschrank nach Anspruch 1 bis 11, **dadurch gekennzeichnet, dass** der Sicherheitsschrank zumindest die Erfordernisse gemäß DIN EN 14470 erfüllt.

13. Sicherheitsschrank nach Anspruch 1 bis 12, **dadurch gekennzeichnet, dass** der Sicherheitsschrank in den jeweiligen Lagerbereichen (2, 3) zumindest eine Lademöglichkeit (19) für die gelagerten Batterien (1) bereitstellt.

14. Verwendung eines Sicherheitsschranks, vorzugsweise Batterieschranks, zur Aufnahme und Lagerung von Hochleistungsbatterien (1) wie Lithium-Ionen-Batterien, wobei der Sicherheitsschrank mit einem Schrankkorpus (4) sowie zumindest einer an den Schrankkorpus angeschlossenen oder hiermit wechselwirkenden Schranktür (5) ausgestattet ist , und wobei der Sicherheitsschrank wenigstens zwei separate Lagerbereiche (2, 3) aufweist,
**dadurch gekennzeichnet, dass**
die Lagerbereiche (2, 3) vorzugsweise thermisch voneinander getrennt sind, wobei die jeweiligen Lagerbereiche (2, 3) zumindest eine zugehörige Druckentlastungseinrichtung (8) aufweisen.
